# EUROPÄISCHE PATENTSCHRIFT

(11) **EP 0 492 180 B1**
(45) Veröffentlichungstag und Bekanntmachung des Hinweises auf die Patenterteilung: **19.01.1994**
(21) Anmeldenummer: 91120631.6
(22) Anmeldetag: 30.11.1991
(51) Int. Cl.: B65G 15/54, B05B 13/02

(54) **Skid-Förderer für Lackieranlagen**
Skid conveyor for paint lines
Convoyeur pour berceaux dans un atelier de laquage

(30) Priorität: 22.12.1990 DE 4041587
(43) Veröffentlichungstag der Anmeldung: 01.07.1992
(73) Patentinhaber: Dürr GmbH, D-70435 Stuttgart (DE)
(72) Erfinder: Heckert, Gerold, D-79639 Grenzach-Wyhlen (DE)
(74) Vertreter: Haecker, Walter

(56) Entgegenhaltungen:
- CH-A- 424 553
- DE-A- 526 523
- GB-A- 225 773
- US-A- 1 896 150
- US-A- 4 186 566

## Beschreibung

Die Erfindung betrifft einen Förderer zum Fördem von Lackiergut-Traggestellen durch eine Lackieranlage, welcher im Querabstand- quer zur Förderrichtung voneinander angeordnete, angetriebene, endlose, flexible, sich in Förderrichtung erstreckende und über Umlenkräder geführte Transportelemente zum Tragen von Kufen der Lackiergut-Traggestelle aufweist wobei der Querabstand der Transportelemente dem Querabstand der Kufen eines Traggestells entspricht.

Die bekannten derartigen Förderer sind als sogenannte Doppelstrangtragkettenförderer ausgebildet, bei denen die Skidkufen auf den die endlosen Transportelemente bildenden Tragketten aufliegen, welche über Kettenräder verlaufen, die Stütz- und Umlenkräder bilden. Die Tragketten weisen eine verhältnismäßig große Teilung von z.B. 160 mm auf und werden mittels automatischer Schmiervorrichtungen mit speziellen Ölen geschmiert, um ein Festfressen zu verhindern. Diese bekannten Förderer besitzen wegen der großen Teilung und wegen der dadurch bedingten Kettenräder großen Durchmessers eine verhältnismäßig große Bauhöhe von ca. 50 cm, wodurch in einer Lackieranlage z.B. Trockner mit unerwünscht großer Bauhöhe benötigt werden. Außerdem haben die erwähnten Schmieröle nachteilige Auswirkungen auf die Qualität der lackierten Produkte, z.B. infolge von Kondensatbildung und einer dadurch bedingten Verschmutzung der lackierten Teile.

Der Erfindung lag die Aufgabe zugrunde, einen Förderer der eingangs erwähnten Art zu schaffen, mit dem sich eine geringere Bauhöhe ohne größere Schwierigkeiten verwirklichen läßt und durch den die Qualität der in der Lackieranlage lackierten Gegenstände nicht beeintrachtigt wird.

Diese Aufgabe läßt sich mit den Merkmalen des Kennzeichens des Anspruchs 1 oder des Anspruchs 4 lösen, und beiden Lösungen ist der Gedanke gemeinsam, Endlosbänder aus einem Stahldrahtgeflecht einzusetzen und diese über walzenförmige Umlenkräder zu führen. Letzteres, nämlich der Verzicht auf Kettenräder, ist die Voraussetzung für die Möglichkeit der Verwendung eines nichtschmierungsbedürftigen Stahldrahtgeflechts kleiner Teilung und des Einsatzes von Umlenkrädern verhältnismäßig kleinen Durchmessers, die wiederum eine Reduzierung der Bauhöhe des Förderers ermöglichen.

Merkmale, Vorteile und Einzelheiten der Erfindung ergeben sich aus den beigefügten Ansprüchen und/oder aus der beigefügten zeichnerischen Darstellung sowie der nachfolgenden Beschreibung einer besonders vorteilhaften Ausführungsform des erfindungsgemäßen Förderers; in der Zeichnung zeigen:
- Fig. 1:: Eine schematische Ansicht eines Abschnitts des Förderers, schräg von oben gesehen;
- Fig. 2:: den Antriebsteil für die beiden in Fig. 1 gezeigten Endlosbänder, wobei dieser Antriebsteil vor dem in Fig. 1 dargestellten Abschnitt des Förderers liegen soll, und
- Fig. 3:: eine schematische Draufsicht auf einen Teil des für die Endlosbänder verwendeten Stahldrahtgeflechts, wobei einer der schraubenlinienförmig ausgebildeten Stahldrähte in einer Position dargestellt wurde, die er einnimmt, nachdem er teilweise aus dem Stahldrahtgeflecht durch Drehen um seine Längsachse "herausgeschraubt" wurde.

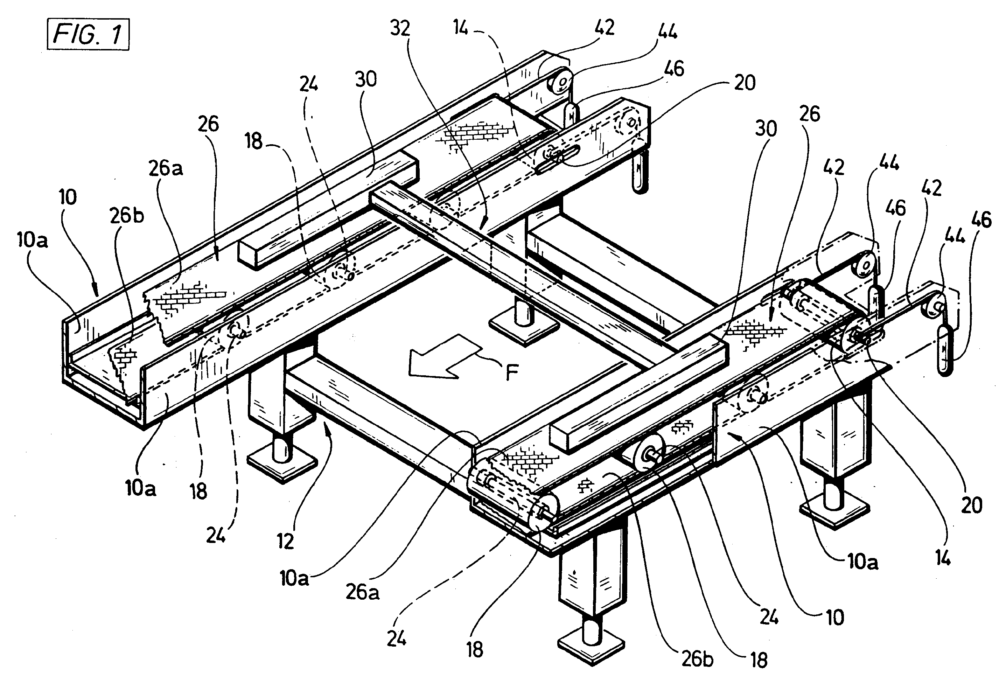

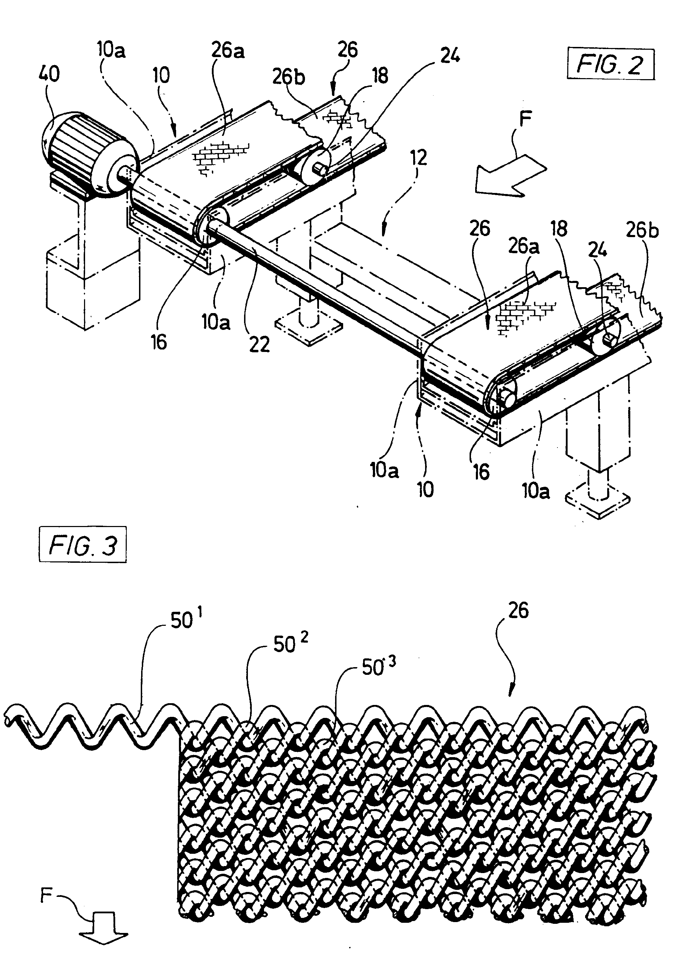

Wie die Figur 1 erkennen läßt, besitzt der Förderer zwei im Querabstand voneinander angeordnete und in Förderrichtung (sh. Pfeil "F") verlaufende Längsträger 10, bei denen es sich um im Querschnitt U-förmige Stahlträger handelt, die auf einem höhenjustierbaren Fußgestell 12 aufliegen. In den Seitenwänden 10a der Längsträger 10 sind für jedes Endlosband zwei Umlenkrollen 14 und 16 (sh. auch Figur 2) und mehrere Tragrollen 18 mit ihren Achsen 20 bzw. 22 bzw. 24 drehbar gelagert, und über diese Rollen verläuft in jedem der Längsträger 10 ein Endlosband 26 aus einem später noch näher zu beschreibenden Stahldrahtgeflecht.

Dabei ist die Breite dieser Endlosbänder nur geringfügig kleiner als der Querabstand der Seitenwände 10a des betreffenden Längsträgers 10, so daß diese Seitenwände eine Führungsbahn für das betreffende Endlosband bilden.

Jedes der Endlosbänder 26 bildet ein auf den Tragrollen 18 aufliegendes Lasttrum 26a, welches durch später noch zu beschreibende Mittel in Förderrichtung F angetrieben wird, und ein zurücklaufendes Leertrum 26b, und auf das Lasttrum wird jeweils eine Kufe 30 der durch die Lackieranlage hindurchzufördernden Lackiergut-Tragschlitten 32 aufgesetzt (die Fig. 1 zeigt lediglich einen Teil eines solchen Schlittens).

Wie die Figur 2 erkennen läßt, verbindet die Welle 22 die beiden Umlenkrollen 16 miteinander sowie mit einem Antriebsmotor 40, der erfindungsgemäß außerhalb der beiden Lastträger 10 angeordnet ist. In Abwandlung des dargestellten Ausführungsbeispiels kann es sich empfehlen, zwischen dem Antriebsmotor 40 und der Achse 22 eine Kardanwelle anzubringen, um den Antriebsmotor nicht so anordnen zu müssen, daß seine Achse mit der Achse 22 fluchtet, und/oder den Antriebsmotor außerhalb eines den Förderer umgebenden Kabinengehäuses anordnen zu können.

Die Umlenkrollen 14 sind mit ihren Achsen 20 in den Seitenwänden 10a der Längsträger 10 in deren Längsrichtung verschiebbar gehalten, um die Endlosbänder 26 spannen zu können. Zu diesem Zweck greifen an den Achsen 20 die Bandspannung bewirkende Kraftspeicher an, die in Fig. 1 nur schematisch dargestellt wurden: Sie umfassen an den Achsen 20 angreifende Seilzüge 42, die über ortsfest drehbar gelagerte Umlenkrollen 44 geführt sind und an denen Gewichte 46 angreifen. Ebensogut könnte die Bandspannung aber auch mittels mechanischer, hydraulischer oder pneumatischer Federn herbeigeführt werden.

Durch derartige Spannvorrichtungen läßt sich auch die Wärmedehnung der Endlosbänder 26 ausgleichen, so daß die Bandspannung stets so groß gehalten werden kann, daß sich die Bänder 26 durch die Antriebsrollen 16 zuverlässig antreiben lassen, selbst wenn die Kraftübertragung von den Antriebsrollen auf die Bänder nur durch Reibschluß erfolgt.

Die Umlenk- und Tragrollen 14, 16 und 18 sind als Stahltrommeln ausgebildet; die Tragrollen 18 sind kugelgelagert und mit Fett dauergeschmiert. Als vorteilhaft hat es sich erwiesen, den Abstand zwischen den Umlenkrollen und den Tragrollen je nach der vom Förderer zu tragenden Last zwischen ca. 30 cm und ca. 1 m zu wählen.

Zur Zentrierung der Endlosbänder 26 bezüglich der Rollen 14, 16, 18 wird weiterhin empfohlen, die Umlenkrollen 14 und/oder die Umlenkrollen 16 als ballige Rollen oder Trommeln auszubilden.

Der in Figur 3 dargestellte Ausschnitt aus dem Stahldrahtgeflecht der Endlosbänder 26 läßt erkennen, daß dieses Stahldrahtgeflecht aus schraubenlinienförmig ausgebildeten Stahldrähten 50 besteht, von denen jeder in die "Schraubenwindungen" der beiden ihm benachbarten Stahldrähte eingreift. Der Stahldraht 50¹ wurde aus Gründen der Verdeutlichung des Aufbaus des Stahldrahtgeflechts in einer Position dargestellt, die sich ergibt, wenn man ihn einige Male um seine Längsachse gedreht hat; dabei schraubt er sich aus dem ihm benachbarten Stahldraht 50², in dessen Schraubenwindungen er eingreift, heraus, so wie dies die Figur 3 erkennen läßt. Der Stahldraht 50¹ ist also mit dem Stahldraht 50² "verschraubt", letzterer ist mit dem ihm benachbarten Stahldraht 50³ "verschraubt", das heißt, die Windungen des Stahldrahts 50² greifen einerseits in die Windungen des Stahldrahts 50¹ ein und andererseits in die Windungen des Stahldrahts 50³. Auf diese Weise ergibt sich ein äußerst zugfestes Band, wenn die Stahldrähte 50 quer zur Förderrichtung F verlaufen.

Ein weiterer Vorteil des Aufbaus der Endlosbänder besteht darin, daß diese im Gegensatz zu Ketten keine Schmierung benötigen, da die Relativbewegungen zwischen den einzelnen Stahldrähten sehr gering sind. Außerdem erlauben die erfindungsgemäßen Endlosbänder infolge ihrer kleinen Teilung die Verwendung von Umlenkrollen verhältnismäßig kleinen Durchmessers, was zu einer geringen Bauhöhe des erfindungsgemäßen Förderers führt - bei der bevorzugten Ausführungsform ca. 20 cm statt ca. 50 cm wie bei Kettenförderern -, so daß auch die Bauhöhe der Einheiten der Lackieranlage, insbesondere des oder der Trockner, gegenüber dem Stand der Technik reduziert werden kann.

Das in den Ansprüchen näher definierte Stahldrahtgeflecht ist so ausgebildet, daß es eine so kleine Teilung, d.h. einen so geringen Abstand "A" seiner in Förderrichtung "F" hintereinander liegenden, ungefähr quer zur Förderrichtung verlaufenden Stahldrähte voneinander hat, daß Kettenräder, wie sie sonst für den Antrieb endloser Transportelemente verwendet werden, nicht in die Lücken des Stahldrahtgeflechts einreifen könnten (bei dem erfindungsgemäßen Förderer werden die Endlosbänder durch glatte, wenn auch insbesondere ballig ausgebildete Umlenkwalzen angetrieben). Eine kleine Teilung ist deshalb von Vorteil, weil dann die Bewegungen der Stahldräte relativ zueinander bei der Umlenkung der Endlosbänder so klein werden, daß auf eine Schmierung der Endlosbänder mit Sicherheit verzichtet werden kann. Bei einer bevorzugten Ausführungsform liegt dieser Abstand "A" bei ca. 8 bis ca. 15 mm und beträgt insbesondere ca. 11 mm.

Bei bevorzugten Ausführungsformen des erfindungsgemäßen Förderers handelt es sich bei dem Stahldrahtgeflecht um ein Geflecht aus Edelstahldrähten, so daß keine Korrosionsprobleme auftreten können.

Optimale Verhältnisse hinsichtlich der durch die Endlosbänder übertragbaren Zugkräfte, der Flexibilität und des Verschleißverhaltens der Endlosbänder lassen sich erreichen, wenn für das Stahldrahtgeflecht Drähte mit einer Stärke von ca. 1,5 bis ca. 2 mm verwendet werden.

## Patentansprüche

1. Förderer zum Fordern von Lackiergut-Traggestellen (32) durch eine Lackieranlage, welcher im Querabstand - quer zur Forderrichtung (F) - voneinander angeordnete, angetriebene, endlose, flexible, sich in Forderrichtung (F) erstreckende und über Umlenkräder (14, 16) geführte Transportelemente (26) zum Tragen von Kufen (30) der Lackiergut-Traggestelle (32) aufweist, wobei der Querabstand der Transportelemente (26) dem Querabstand der Kufen (30) eines Traggestells (32) entspricht, **dadurch** **gekennzeichnet,** daß die Transportelemente Endlosbänder (26) aus einem Stahldrahtgeflecht und die Umlenkräder (14, 16) ballig ausgebildete Walzen sind.

2. Förderer nach Anspruch 1, dadurch gekennzeichnet, daß das Stahldrahtgeflecht von quer zur Förderrichtung (F) verlaufenden, schraubenlinienförmig ausgebildeten Stahldrähten (50) gebildet wird, wobei in Forderrichtung (F) hintereinander liegende Stahldrähte (50¹, 50², 50³) so ineinandergreifen, daß die Verbindung zwischen den Stahldrähten durch eine Schraubenbewegung der Stahldrähte lösbar wäre.

3. Förderer nach Anspruch 2, dadurch gekennzeichnet, daß der Abstand der quer zur Förderrichtung (F) verlaufenden Stahldrähte (50) voneinander - in Förderrichtung (F) gemessen - 8 bis 15 mm beträgt.

4. Förderer zum Fordern von Lackiergut-Traggestellen (32) durch eine Lackieranlage, welcher im Querabstand - quer zur Förderrichtung (F) - voneinander angeordnete,angetriebene, endlose, flexible, sich in Förderrichtung (F) erstreckende und über Umlenkräder (14, 16) geführte Transportelemente (26) zum Tragen von Kufen (30) der Lackiergut-Traggestelle (32) aufweist, wobei der Querabstand der Transportelemente (26) dem Querabstand der Kufen (30) eines Traggestells (32) entspricht, **dadurch** **gekennzeichnet,** daß die Transportelemente Endlosbänder (26) aus einem Stahldrahtgeflecht und die Umlenkräder (14, 16) als Walzen ausgebildet sind, daß das Stahldrahtgeflecht von quer zur Förderrichtung (F) verlaufenden, schraubenlinienförmig ausgebildeten Stahldrähten (50) gebildet wird, wobei in Förderrichtung hintereinander liegende Stahldrähte (50¹, 50², 50³) so ineinandergreifen, daß die Verbindung zwischen den Stahldrähten durch eine Schraubenbewegung der Stahldrähte lösbar wäre, und daß der Abstand der quer zur Förderrichtung (F) verlaufenden Stahldrähte voneinander - in Förderrichtung (F) gemessen - 8 bis 15 mm beträgt.

5. Förderer nach Anspruch 4, dadurch gekennzeichnet, daß die Walzen (14, 16) ballig ausgebildet sind.

6. Förderer nach einem oder mehreren der vorstehenden Ansprüche, dadurch gekennzeichnet, daß das Stahldrahtgeflecht ein Milanaise-Geflecht ist.

7. Förderer nach einem oder mehreren der vorstehenden Ansprüche, dadurch gekennzeichnet, daß die Stahl- drähte (50) eine Stärke von 1,5 - 2 mm aufweisen.

8. Förderer nach einem oder mehreren der vorstehenden Ansprüche, dadurch gekennzeichnet, daß mindestens eine der Umlenkwalzen (14, 16) für jedes Endlosband (26) eine Antriebswalze (16) ist.

9. Förderer nach einem oder mehreren der vorstehenden Ansprüche, dadurch gekennzeichnet, daß mindestens eine der Umlenkwalzen (14, 16) für jedes Endlosband (26) eine in dessen Längsrichtung (F) verlagerbare Spannwalze (14) ist, an der ein in dieser Längsrichtung wirkender Kraftspeicher (46) angreift.

## Claims

1. Conveyor for conveying support frames (32) for products to be painted through a paint plant, comprising driven, endless, flexible transport elements (26) arranged in transverse spaced relation to one another - transversely to the direction of conveyance (F) -, said transport elements extending in the direction of conveyance (F), being guided over deflector wheels (14, 16) and bearing runners (30) of the support frames (32) for the products to be painted, wherein the transverse distance between the transport elements (26) corresponds to the transverse distance between the runners (30) of a support frame (32), characterized in that the transport elements are endless bands (26) made of a steel mesh and the deflector wheels (14, 16) are rollers having a cambered design.

2. Conveyor as defined in claim 1, characterized in that the steel mesh is formed of steel wires (50) helical in design and extending transversely to the direction of conveyance (F), wherein steel wires (50¹, 50², 50³) located one behind the other in the direction of conveyance (F) engage in one another such that the connection between the steel wires would be releasable due to a screwing movement of the steel wires.

3. Conveyor as defined in claim 2, characterized in that the distance from one another of the steel wires (50) extending transversely to the direction of conveyance (F) - when measured in the direction of conveyance (F) - is 8 to 15 mm.

4. Conveyor for conveying support frames (32) for products to be painted through a paint plant, comprising driven, endless, flexible transport elements (26) arranged in transverse spaced relation to one another - transversely to the direction of conveyance (F) -, said transport elements extending in the direction of conveyance (F), being guided over deflector wheels (14, 16) and bearing runners (30) of the support frames (32) for the products to be painted, wherein the transverse distance between the transport elements corresponds to the transverse distance between the runners (30) of a support frame (32), characterized in that the transport elements are endless bands (26) made of a steel mesh and the deflector wheels (14, 16) are designed as rollers, that the steel mesh is formed of steel wires (50) helical in design and extending transversely to the direction of conveyance (F), wherein steel wires (50¹, 50², 50³) located one behind the other in the direction of conveyance engage in one another such that the connection between the steel wires would be releasable due to a screwing movement of the steel wires, and that the distance from one another of the steel wires extending transversely to the direction of conveyance (F) - when measured in the direction of conveyance (F) - is 8 to 15 mm.

5. Conveyor as defined in claim 4, characterized in that the rollers (14, 16) are of a cambered design.

6. Conveyor as defined in any or several of the preceding claims, characterized in that the steel mesh is a Milanaise mesh.

7. Conveyor as defined in any or several of the preceding claims, characterized in that the steel wires (50) have a gauge of 1.5 - 2 mm.

8. Conveyor as defined in any or several of the preceding claims, characterized in that at least one of the deflector rollers (14, 16) is a drive roller (16) for each endless band (26).

9. Conveyor as defined in any or several of the preceding claims, characterized in that at least one of the deflector rollers (14, 16) is a tension roller (14) for each endless band (26), said tension roller being displaceable in the longitudinal direction (F) of said band and a power source (46) acting in this longitudinal direction engaging on said roller.

## Revendications

1. Transporteur, pour transporter dans un atelier de laquage des berceaux pour produit à peindre (32), présentant, espacés transversalement - transversalement par rapport à la direction de transport (F) - les uns des autres, des éléments de transport (26) entraînés, flexibles, s'étendant dans la direction de transport (F), et guidés par l'intermédiaire de roues de renvoi (14, 16), en vue de porter des patins (30) appartenant au berceau de produit à peindre (32), l'espacement transversal entre les éléments de transport (26) correspondant à l'espacement transversal entre les patins (30) d'un berceau (32), caractérisé en ce que les éléments de transport (26) sont des bandes continues (26) composées d'un grillage en fils d'acier et les roues de renvoi (14, 16) sont en tonneau.

2. Transporteur selon la revendication 1, caractérisé en ce que le grillage en fils d'acier est formé de fils d'acier (50) s'étendant transversalement par rapport à la direction de transport (F), réalisés avec une allure hélicoïdale, les fils d'acier (50¹, 50², 50³) placés les uns derrière les autres dans la direction de transport (F) s'engageant les uns dans les autres, de manière que la liaison entre les fils d'acier soient désolidarisable en opérant un mouvement hélicoïdal des fils d'acier.

3. Transporteur selon la revendication 2, caractérisé en ce que la distance mutuelle entre les fils d'acier (50) s'étendant dans la direction de transport (50) est de 8 à 15 mm, mesurée dans la direction de transport (F).

4. Transporteur, pour transporter dans un atelier de laquage des berceaux pour produit à peindre (32), présentant, espacés transversalement - transversalement par rapport à la direction de transport (F) - les uns des autres, des éléments de transport (26) entraînés, flexibles, s'étendant dans la direction de transport (F), et guidés par l'intermédiaire de roues de renvoi (14, 16), en vue de porter des patins (30) appartenant au berceau de produit à peindre (32), l'espacement transversal entre les éléments de transport (26) correspondant à l'espacement transversal entre les patins (30) d'un berceau (32), caractérisé en ce que les éléments de transport (26) sont des bandes continues (26) composées d'un grillage en fils d'acier et les roues de renvoi (14, 16) sont en tonneau, en ce que le grillage en fils d'acier est formé de fils d'acier (50) s'étendant transversalement par rapport à la direction de transport (F), réalisés avec une allure hélicoïdale, les fils d'acier (50¹, 50², 50³) piacés les uns derrière les autres dans la direction de transport (F) s'engageant les uns dans les autres, de manière que la liaison entre les fils d'acier soient désolidarisable en opérant un mouvement hélicoïdal des fils d'acier, et en ce que la distance mutuelle entre les fils d'acier (50) s'étendant dans la direction de transport (50) est de 8 à 15 mm, mesurée dans la direction de transport (F).

5. Transporteur selon la revendication 4, caractérisé en ce que les rouleaux (14, 16) sont en tonneau.

6. Transporteur selon l'une ou plusieurs des revendications précédentes, caractérisé en ce que le grillage en fils d'acier est un grillage à la milanèse.

7. Transporteur selon l'une ou plusieurs des revendications précédentes, caractérisé en ce que les fils d'acier (50) présentent une épaisseur allant de 1,5 à 2 mm.

8. Transporteur selon l'une ou plusieurs des revendications précédentes, caractérisé en ce qu'au moins l'un des rouleaux de renvoi (14, 16) associé à chaque bande continue (26) est un rouleau d'entraînement (16).

9. Transporteur selon l'une ou plusieurs des revendications précédentes, caractérisé en ce qu'au moins l'un des rouleaux de renvoi (14, 16) associé à chaque bande continue (26) est un rouleau tendeur (14), déplaçable dans sa direction longitudinale (F), sur lequel agit un accumulateur de force (46) opérant dans sa direction longitudinale.
